# EUROPEAN PATENT APPLICATION

(11) **EP 4 607 788 A1**
(43) Date of publication of application: **27.08.2025**
(21) Application number: 24159302.9
(22) Date of filing: 23.02.2024
(51) Int. Cl.: H02S 20/23, F24S 25/636

(54) **SYSTEM AND METHOD FOR MOUNTING A SOLAR PANEL**

(71) Applicant: MP Bolagen Industri AB, 574 31 Vetlanda (SE)
(72) Inventor: Hjalmarsson, Anders, 574 31 Vetlanda (SE); Sandberg, Magnus, 574 31 Vetlanda (SE); Svahn, Kent, 574 31 Vetlanda (SE); Thomsen, Peter, 574 31 Vetlanda (SE); Hillström, Patrik, 574 31 Vetlanda (SE)
(74) Representative: AWA Sweden AB

(57) **Abstract**

The present invention relates to a system for mounting a solar panel (3) on a mounting surface, the system comprising at least one elongated base element (1) configured to be positioned on the mounting surface; at least one support member (2) for receiving and supporting a solar panel (3), wherein the support member (2) comprises: a first body part (20) configured to abut an outer surface of the base element (1) and to receive a bottom side (30) of a solar panel (3); a clamping member (21) configured to abut an inner side of the base element (1); a second body part (22) configured to receive a top side (31) of a solar panel (3); and an operable fixation member (23), such that when operated, the base element (1) is clamped between the first body part (20) and the clamping member (21).

## Description

### Technical Field

The present disclosure relates to a system for mounting a solar panel on a mounting surface.

### Background

Renewable energy solutions is becoming increasingly important. Energy consumption is expected to continue increasing at the same time that we want to decrease our environmental footprint on the Earth. The demand for electricity is projected to grow by 3-4% per year between 2024-2026. Solar panels are a promising source of renewable energy since they generate electricity without producing greenhouse gases or other pollutants.

Solar panels are becoming more and more popular as advances in the manufacturing process has made them more affordable. Solar panels are commonly installed on top of roofs, however, the installation process can be a cumbersome task.

Hence there is a need for improving the installation process of solar panels, especially for large installations on for instance roofs of large buildings.

### Summary

It is an object of the present invention to provide an improved solution that alleviates the mentioned drawbacks with present devices. Furthermore, it is an object to provide system for mounting a solar panel on a mounting surface that provides a time efficient and flexible assembly procedure.

The invention is defined by the appended independent claims, with embodiments being set forth in the appended dependent claims, in the following description and in the drawings.

According to a first aspect of the invention, there is provided a system for mounting a solar panel on a mounting surface. The system comprises at least one elongated base element configured to be positioned on the mounting surface and at least one support member for receiving and supporting a solar panel. The support member is arranged on the base element. The support member comprises a first body part configured to abut an outer surface of the base element and to receive a bottom side of a solar panel, a clamping member configured to abut an inner side of the base element, a second body part configured to receive a top side of a solar panel, and an operable fixation member arranged to the second body part and to the clamping member, such that when operated, the base element is clamped between the first body part and the clamping member, and a solar panel received in the support member is clamped between the first body part and the second body part.

By "elongated base element" it may be meant an element that is configured to be attached to a mounting surface. The elongated base element may be configured to be attached by bolts or screws to a mounting surface, or be arranged to rest on the mounting surface. The elongated base element may be a beam, rack, rim or frame. The mounting surface may be a rooftop or the ground. The rooftop may be an industrial rooftop. The elongated base element may be configured to rest directly onto the mounting surface, or to be arranged onto the mounting surface via one or more supports.

By "support member" it may be meant a member that is configured to be attached to the elongated base element and to receive a solar panel such that when the elongated base element is arranged to a mounting surface, the solar panel is mounted on the mounting surface.

By inner and outer sides of the base element it may be meant opposite sides of the same portion of the base element, such that said portion may be clamped between the clamping member and the first body part. The base element may have a profile with different portions, and at least one portion of the base element's profile may be clamped to fasten the support member to the base element. The inner side of the base element may be a side of a portion thereof facing towards the mounting surface when the base element is arranged thereto, and the outer side may be a side facing away from the mounting surface. The inner and outer sides may be facing towards or away from the mounting surface in a direction perpendicular to the mounting surface, or with an angle of between 10-90 degrees relative to the mounting surface. Alternatively, the inner side may be a side facing in a direction substantially in parallel with the mounting surface when the base element is arranged thereto, and the outer side may likewise be facing in a direction in parallel with the mounting surface but opposite to the direction of the inner side.

The system for mounting a solar panel on a mounting surface facilitates the installation process when mounting a solar panel on to a mounting surface. The operation of the fixation member provides both a fixation of the support member to the base element, as well as a fixation of the first end of a solar panel to the support member. An easy and quick assembly of the solar panel to the base element may thereby be provided. Further, the configuration of the support member and the base element provides a continuously adjustable position of the support member along the base element. The position of the support member may thereby, during mounting of the solar panel, be adjusted to fit the arrangement of the solar panel.

The facilitation is made possible by the system comprising the support member. The support member may be a bracket, a holder or an attachment. The support member may be one unit, which allows for an easier installation process since it is only necessary to keep track of one unit. The support member may be delivered as one unit. By one unit it may be meant that the parts of the support member are interconnected such that they are not completely separable without further operation. This ensures that there is no need to keep track of several different screws, bolts, and attachments when mounting a solar panel to a mounting surface. The two body parts and the clamping member may thereby, when not arranged to the base element, still be coupled to each other. An operator may thereby not need to handle more than one unit when arranging the support member to the base element.

The system may comprise an additional support member configured to receive a second end of the solar panel, opposite to the first end. The additional support member may be arranged to the same elongated base element.

The support member may be arranged to the elongated base element by inserting it at an end of the elongated base element. An alternative way of inserting the support member may be by rotating the clamping member 90 degrees, insert it to the elongated base element, and then rotate the clamping member back 90 degrees. This may be enabled by the clamping member having a length that is shorter than its width.

The base element being clamped between the first body part and the clamping member may enable the support member to be positioned anywhere on the elongated base element since the attachment is not dependent on using hooks and openings, snap fastenings, or the like. The support member may be lengthwise adjustable on the elongated base element. The support member may be lengthwise adjustable continuously on the elongated base element.

A solar panel may be attached to the support member at the same time that the support member is attached to the elongated base element when operating the operable fixation member. Therefore, only one unit is necessary during the operation even though two attachments are made at the same time. The installation process may thereby be facilitated by both the clamping of the support member to the base element and the solar panel to the support member being provided by the same operation.

The base element may comprise a bottom side portion configured to extend substantially in parallel with the mounting surface, and two side walls extending away from the bottom side portion. Each of the two side walls of the elongated base element may comprise an inwardly extending flange, wherein the first body part may be configured to abut outer surfaces of the two flanges, and the clamping member may be configured to abut an inner side of the two flanges.

By "bottom side portion" it may be meant a portion of the elongated base element that is configured to be in contact with a mounting surface or facing towards the mounting surface when arranged thereto. The bottom side portion may be configured to be in direct contact with the mounting surface. The bottom side portion may be configured to be arranged on one or more support which is arranged on the mounting surface.

The inwardly extending flanges may be clamped between the clamping member and the first body part when the operable fixation member is operated. The inwardly extending flanges may extend substantially in parallel to the bottom side portion of the elongated base element. The clamping member may have length that is shorter than an open distance between the two inwardly extending flanges, and a width that is longer than said open distance. The clamping member may thereby be movable between two positions relative to e.g. the first body part. In a first position the clamping member may be inserted between the two flanges, and in a second position the clamping member may be positioned for the clamping operation.

The base element may be substantially U-shaped, and the inwardly extending flanges may extend substantially in parallel with the bottom side portion. By "substantially U-shaped" it may be meant that the two side walls may be arranged on opposite sides of the bottom side portion compared to each other, creating a U-shape with the bottom side portion.

The second body part may comprise at least two outer side alignment members configured to be in contact with an outer side of the each of the side walls, respectively.

The two outer side alignment members may help stabilize the support member when the support member is attached to the elongated base element. The two outer side alignment members may ensure that the support member will not slide sideways on the elongated base element. By sideways it may be meant a transversal direction relative to the elongated extension of the base element.

The clamping member may comprise a threaded hole, and the fixation member may be a screw or bolt in threaded connection with said threaded hole and wherein the fixation member may be operated by rotation.

A rotation of the fixation member may thereby provide a movement of the clamping member towards the second body part. The fixation member may further extend through an opening in the first body part. When the clamping member moves towards the second body part, the clamping of the base element between the clamping member and the first body part may occur. The rotation of the fixation member may further provide a movement of the first and second body parts towards each other, thereby clamping a solar panel arranged thereto.

A spring member may be arranged between the second body part and the clamping member, providing a biasing force of moving the clamping member away from the second body part.

An opposite rotation of the fixation member may provide, facilitated by the biasing force, the second body part to move away from the clamping member such that the clamping between the first body part and the clamping member is loosened. This may allow the support member to be moved to another position of the elongated base element or for the support member to be removed from the elongated base element.

Each of the flanges may comprise a first flange portion extending inwardly from the respective side wall, and a second flange portion extending from the first flange portion in a direction substantially perpendicular to the first flange portion and towards the bottom side portion.

The flanges may be clamped between the clamping member and the first body part. The first flange portion may be clamped between the clamping member and the first body part. When the base element is clamped between the clamping member and the first body part, the clamping member may be configured to abut an inner side of the first flange portion, and the first body part may be configured to abut an outer side, opposite said inner side, of the first flange portion. The second flange portions may be used for alignment of the support member to the base element. The open distance between the flanges may be defined as the distance between the two second flange portions, along a direction in parallel with the bottom side portion.

The first body part may comprise at least two inner side alignment members configured to abut the second flange portions, respectively.

The two inner side alignment members may help stabilize the support member when the support member is attached to the elongated base element. The two inner side alignment members may ensure that the support member will not slide sideways on the elongated base element. The two inner side alignment members may help stabilize the support member sideways together with the two outer side alignment members.

The first body part may comprise a bottom side solar panel receiving portion configured to receive a bottom side of a solar panel. The second body part may comprise a top side solar panel receiving portion configured to receive a top side of a solar panel. A solar panel may, when the fixation member is operated, be clamped between the bottom side solar panel receiving portion and the top side solar panel receiving portion. The bottom side solar panel receiving portion may comprise two side members each configured to rest on the base element, and a resilient member arranged between the two side members, the resilient member configured to be resiliently attached to a bottom side of a solar panel. The resilient member may allow a solar panel to be arranged to the support member safely without inflicting damage onto the solar panel. The resilient member may be configured to provide a resilient force towards a bottom side of a solar panel received at the bottom side solar panel receiving portion. The resilient member may thereby ensure that a received solar panel is exposed to a suitable level of clamping force when clamped to the support member.

The clamping member may be rotatable relative to the first body part and/or the second body part at least 90 degrees between an insertion position in which the support member may be arrangeable to the elongated base element, and an attachment position in which the elongated base element can be clamped between the clamping member and the first body part.

The clamping member may have a length being shorter than a distance between the two inwardly extending flanges and a width being longer than said distance.

The support member may be a first support member configured to receive a solar panel at a first end of the solar panel, and the system may further comprise a second support member configured to receive a second end of the solar panel. The second support member may comprise a receiving element configured to receive the solar panel, a support column to which the receiving element is arranged. The support column may extend into the base element between the inwardly extending flanges. The base element may comprise, in the bottom side portion at least one opening, and the support column may comprise at least one hook member configured to engage with said at least one opening in the base element. The support column may further comprise at least one snap member configured to form a snap fastening between the support column and the base element, in engagement with at least one of the flanges. The first and second support members may together support respective opposite sides of a solar panel. The base element may comprise a plurality of openings with a distance between along the elongation of the base element. The second support member may thereby be arranged to engage with either of the openings to position the second support member.

When arranging a solar panel to the system, the second support member may be arranged at a location of an opening in the base element. The second end of the solar panel may then be arranged to the receiving element on the second support member. The first end of the solar panel may then be arranged to the first support member. The first support member may be continuously adjustable along the elongation of the base element such that the reception of the first end of the solar panel is adapted to the particular solar panel that is received before the fixation member of the first support member is operated to fix the first support member to the base element. The receiving element on the second support member may comprise a hinge type receiving element configured to receive the second end of the solar panel in an upraised position, and then rotated as a hinge for the solar panel to the intended mounting position such that the first end of the solar panel may be received by the first support member.

According to a second aspect, a method of arranging a solar panel to a mounting surface using a system for mounting a solar panel is provided. The method comprises the steps of arranging an elongated base element to the mounting surface, arranging a support member to the base element, the support member comprising a first body part, a second body part and a clamping member, arranging a solar panel to the support member such that a bottom side of the solar panel is received by the first body part and a top side of the solar panel is received by the second body part, and operating a fixation member arranged to the second body part and to the clamping member such that the base element is clamped between the first body part abutting an outer surface of the base element and the clamping member abutting an inner surface of the base element, and such that the solar panel is clamped between the first body part and the second body part.

The system may be a system according to any of the embodiments described above.

The base element may comprise a bottom side portion extending substantially in parallel with the mounting surface, and two side walls extending away from the bottom side portion. Each of the two side walls of the elongated base element may comprise an inwardly extending flange. The first body part may be configured to abut outer surfaces of the two flanges, and the clamping member may be configured to abut an inner side of the two flanges.

The support member may be a first support member receiving a first end of the solar panel, and the method may further comprise a step of arranging a second support member to the elongated base element, the second support member comprising a receiving element which may be configured to receive a second end the solar panel, a support column to which the receiving element may be arranged. The support column may comprise at least one hook member and at least one snap member. The step of arranging the second support member to the base element may comprise the steps of arranging the support column to extend between the flanges such that the at least one hook member engages with at least one opening in the bottom side portion of the base element, and fastening the support column to the base element by the snap member forming a snap fastening between the support column and the base element in engagement with the flange.

According to a another aspect, there is provided a system for mounting a solar panel on a mounting surface, the system comprising at least one elongated base element configured to be positioned on the mounting surface, the elongated base element comprises a bottom side portion configured to extend substantially in parallel with the mounting surface, and two side walls extending away from the bottom side portion, wherein each of the two side walls of the elongated base element comprises an inwardly extending flange. The system further comprises a second support member configured to receive a second end of the solar panel. The second support member comprises a receiving element configured to receive the solar panel, a support column to which the receiving element is arranged, wherein the support column extends into the base element between the inwardly extending flanges. The base element comprises, in the bottom side portion at least one opening, and the support column comprises at least one hook member configured to engage with said at least one opening in the base element. The support column further comprises at least one snap member configured to form a snap fastening between the support column and the base element, in engagement with the flanges.

By "elongated base element" it may be meant an element that is configured to be attached to a mounting surface. The elongated base element may be configured to be attached by bolts or screws to a mounting surface, or be arranged to rest on the mounting surface. The elongated base element may be a beam, rack, rim or frame. The mounting surface may be a rooftop or the ground. The rooftop may be an industrial rooftop. The elongated base element may be configured to rest directly onto the mounting surface, or to be arranged onto the mounting surface via one or more supports.

By "bottom side portion" it may be meant a portion of the elongated base element that is configured to be in contact with a mounting surface or facing towards the mounting surface when arranged thereto. The bottom side portion may be configured to be in direct contact with the mounting surface. The bottom side portion may be configured to be arranged on one or more support which is arranged on the mounting surface.

By "second support member" it may be meant a member that is configured to be attached to the elongated base element and to receive a solar panel such that when the elongated base element is arranged to a mounting surface, the solar panel is mounted on the mounting surface.

The second support member may enable a smoother installation process. The second support member may not need external bolts or screws to become attached to the elongated base element. The second support member may be one unit which ensures that there is no need to keep track of several different screws, bolts, or attachments when mounting a solar panel to a mounting surface.

The second support member may be positioned at any position where an opening in the bottom side portion exist. Therefore if the elongated base element comprises a plurality of openings, the second support member may be positioned at different positions. The second support member may be positioned at a location dependent on the installation requirements of the solar panel.

The base element may be substantially U-shaped, and the inwardly extending flanges may extend substantially in parallel with the bottom side portion. By "substantially U-shaped" it may be meant that the two side walls may be arranged on opposite sides of the bottom side portion compared to each other, creating a U-shape with the bottom side portion. The two side walls may extend substantially in parallel to each other.

The flanges may comprise a first flange portion extending inwardly from the respective side wall. The flanges may comprise a second flange portion extending from the first flange portion in a direction substantially perpendicular to the first flange portion and towards the bottom side portion.

The snap member may be configured to form a snap fastening between the support column and the base element, in engagement with the second flange portion.

The snap member may be configured to engage with an end of the second flange portion, said end facing towards the bottom side portion.

The snap member may be configured to form a snap fastening between the support column and the base element, in engagement with the first flange portion.

The second support member may comprise two snap members arranged on respective sides of the support column and configured to engage with respective inwardly extending flanges.

The snap member may be a cut out of the support column positioned at a side of the support column.

The material of the support column may be cut and bent in order to form the snap member. The snap member may be integrally formed with the support column. A rigid connection between the snap member and the support column may thereby be provided.

The second support member may comprise two snap members, wherein each of the snap members may be configured to be in engagement with a respective flange such that the snap members form a snap fastening between the support column and the base element.

The two snap members may be arranged on respective sides of the support column facing towards the inwardly extending flanges when arranged to the base element. Such symmetric arrangement of snap fastening between the second support member and the base element may provide a stable and rigid connection between the two parts, and thereby a stable support for a solar panel to the mounting surface.

The second support member may extend longitudinally and the second support member may be configured to be inserted to the base element at an angle between the longitudinal extension and an axis orthogonal to the bottom side portion such that the second support member may be fastened to the base element when the second support member is rotated such that the longitudinal extension is parallel to the axis orthogonal to the bottom side portion.

The hook member may be configured to be engaged with the opening when the second support member has been rotated such that the longitudinal extension is parallel to the axis orthogonal to the bottom side portion.

The second support member may be inserted at an angle such that the hook member extends into the opening. When the second support member has been rotated the hook member may be engaged to the opening such that it facilitates the fastening of the second member to the base element.

The hook member may help prevent the second support member from moving lengthwise of the base element after the second support member has been fastened to the base element.

The snap member may be configured to flex the flange outwards when the second support member is rotated, and the snap member may be configured to form a snap fastening between the support column and the base element, in engagement with the flanges, when the second support member has been rotated such that the longitudinal extension is parallel to the axis orthogonal to the bottom side portion.

The snap member ensures that the second support member is fastened to the elongated support member. The second support member may not be moved away from the base element or in any sideway direction relative to the elongated base element. By sideways it may be meant a transversal direction relative to the elongated extension of the base element.

The flanges and side walls may be pushed or flexed outwards by the snap member when the second support member is rotated, and the snap member passes the flanges. The flanges may return to an original position when the second support member has been rotated.

The snap member may have an increasing width along the extension of the support column in a direction away from the bottom side portion when arranged thereto. The snap member may further be defined as having an increasing width along the extension of the support column in a direction towards the receiving element. The increasing width of the snap member may help the outward flex of the flanges by gradually displacing the flanges and side walls. Gradually displacing the flanges and side walls may make it easier to rotate the second support member into a fixed position relative to the base element. When the support column has been rotated to be in parallel with the axis orthogonal with the bottom side surface, the snap member is located such that it forms the snap fastening with the flanges.

The support column may comprise two hook members, and the base element may comprise at least two openings arranged in pairs. Each pair comprises two openings at location corresponding to the location of the hook members on the support column.

The support column may have a width substantially equal to a distance between the flanges. Side portions of the support column may be arranged adjacent or in contact with the flanges when the support column is arranged to the base element. The snap member may extend out from the side portions of the support column, locally extending the width of the support column to be larger than the distance between the flanges. The support column may comprise two snap members, symmetrically arranged on respective side portions of the support column.

The receiving element on the second support member may comprise a hinge type receiving element configured to receive the second end of the solar panel in an upraised position, and then rotated as a hinge for the solar panel to the intended mounting position such that the first end of the solar panel may be received by the first support member.

The system may comprise an additional support member configured to receive a first end of a solar panel. Such additional support member may be the first support member as described in either of the embodiments above, an additional second support member, or another support member configured to receive an end of a solar panel. The system comprising the second support member may be used independently of a system comprising the first support member according to any of the embodiments described herein. Features of the base element as described in connection with any of the embodiments herein may be present in the base element used with the second support member.

### Brief Description of the Drawings

The invention will in the following be described in more detail with reference to the enclosed drawings, wherein:
Fig. 1 shows a perspective view of an elongated base element according to an embodiment.
Fig. 2 shows a perspective view of a support member arranged on an elongated base element according to an embodiment.
Figs. 3a-3c show perspective views of a support member according to an embodiment.
Fig. 4 shows a cross section view of a support member according to an embodiment.
Figs. 5a-5b show front and a back views of a support member according to an embodiment.
Figs. 6a-6b show perspective views of a support member arranged on an elongated base element according to an embodiment.
Fig. 7 shows a side view of a support member arranged on an elongated base element when supporting a solar panel according to an embodiment.
Fig. 8 shows a perspective view of a first support member and a second support member arranged on an elongated base element when supporting a solar panel according to an embodiment.
Fig. 9 shows a side view of a second support member arranged on an elongated base element when supporting a solar panel according to an embodiment.
Fig. 10 shows a perspective view of a second support member arranged on an elongated base element according to an embodiment.
Figs. 11a-11b show perspective views of a support column of a second support member according to an embodiment.
Figs. 12a-12b show perspective views of a second support member arranged on an elongated base element according to an embodiment.
Figs. 13a-13b show front and a back views of a second support member arranged on an elongated base element according to an embodiment.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

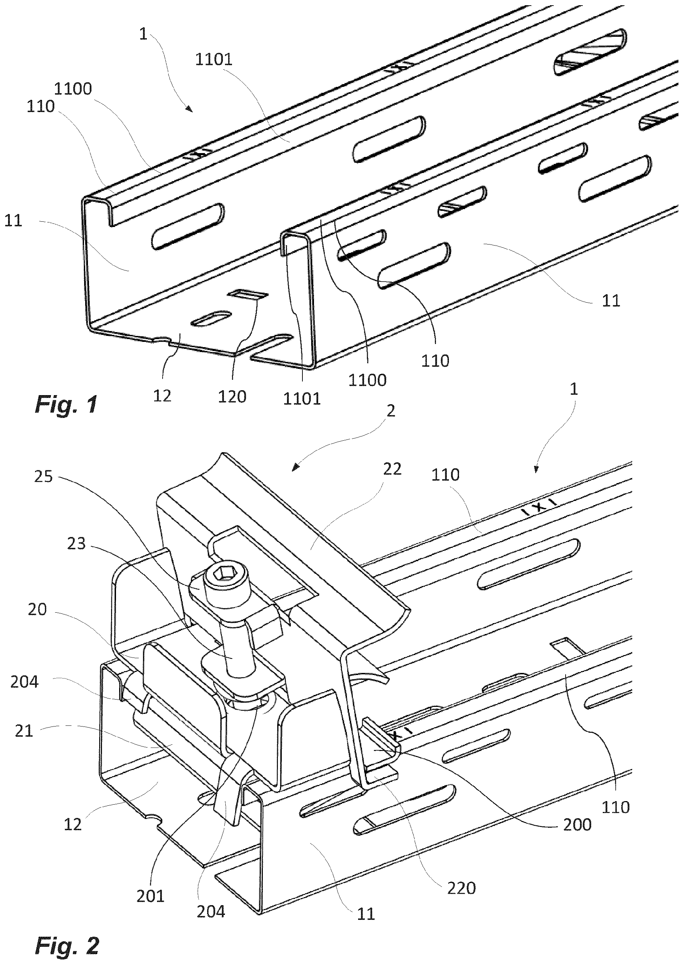

Fig.1 schematically illustrates an elongated base element 1. The elongated base element 1 is configured to be positioned on a mounting surface 8. The mounting surface 8 may for instance be a roof of a building, particularly a flat or slightly sloping mounting surface, such as a flat or slightly sloping roof of a building. The elongated base element 1 may be substantially U-shaped. The elongated base element 1 may be a beam, rack, rim or frame. The elongated base element 1 may be formed out of metal, such as steel or aluminum. The entire elongated base element 1 may be formed out of the same material. The elongated base element 1 may be formed out of different materials.

The elongated base element 1 may comprise a bottom side portion 12. The bottom side portion 12 may be configured to extend substantially in parallel with a mounting surface 8. The bottom side portion 12 may be configured to abut a mounting surface 8 when arranged on the mounting surface 8. The elongated base element 1 may be configured to rest on one or more support 5. The bottom side portion 12 may be configured to rest on one or more support 5. The bottom side portion 12 may be flat. The bottom side 12 may comprise one or more openings 120. The opening 120 of the bottom side 12 may be circle, ellipse, rectangular, squared, half-circle or half-ellipse shaped. The opening 120 of the bottom side may be used for the arrangement or fixation of the elongated base element 1 to the mounting surface and/or the support member.

The elongated base element 1 may comprise two side walls 11. The two side walls 11 may extend away from the bottom side portion 12. Each of the two side walls 11 may extend along a respective side of the bottom side portion 12, along the entire longitudinal length of the elongated base element 1.

Each of the two side walls 11 may comprise an inwardly extending flange 110. The inwardly extending flanges 110 may extend substantially in parallel with the bottom side portion 12. Each of the inwardly extending flanges 110 may comprise a first flange portion 1100 extending inwardly from the respective side wall 11. Each of the inwardly extending flanges 110 may comprise a second flange portion 1101 extending from the first flange portion 1100 in a direction substantially perpendicular to the first flange portion 1100 and towards the bottom side portion 12. The inwardly extending flanges 110 may be L-shaped.

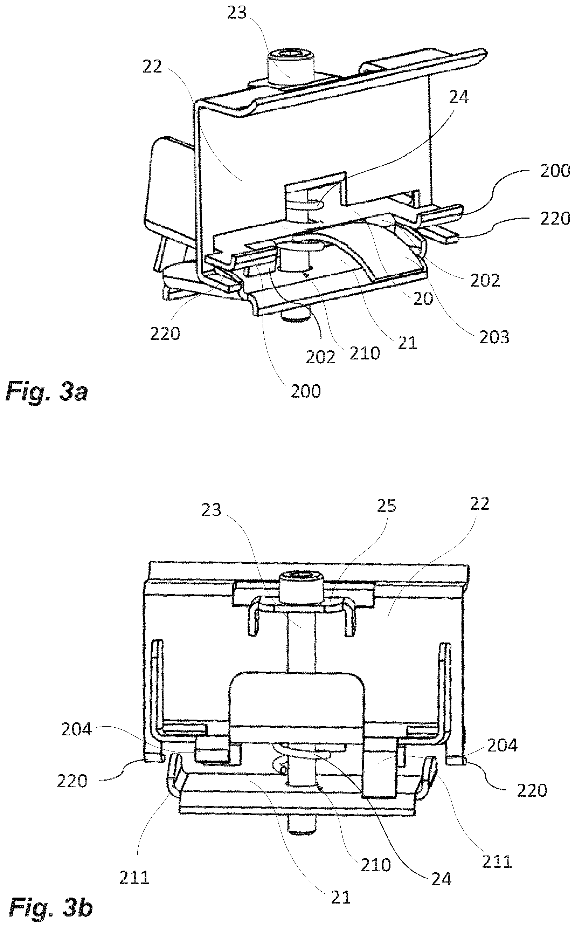

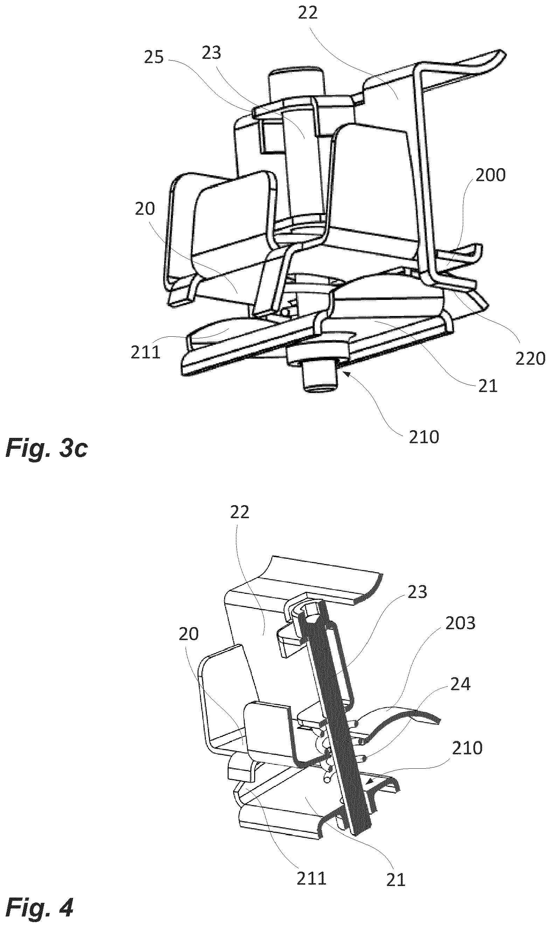

Fig. 2 schematically illustrates a system for mounting a solar panel 3 on a mounting surface. The system comprises the elongated base element 1 and at least one support member 2 for receiving and supporting a solar panel 3. Figs. 3a-3c schematically illustrate the support member 2 from different angles and Fig. 4 schematically illustrates a cross-section view of the support member 2.

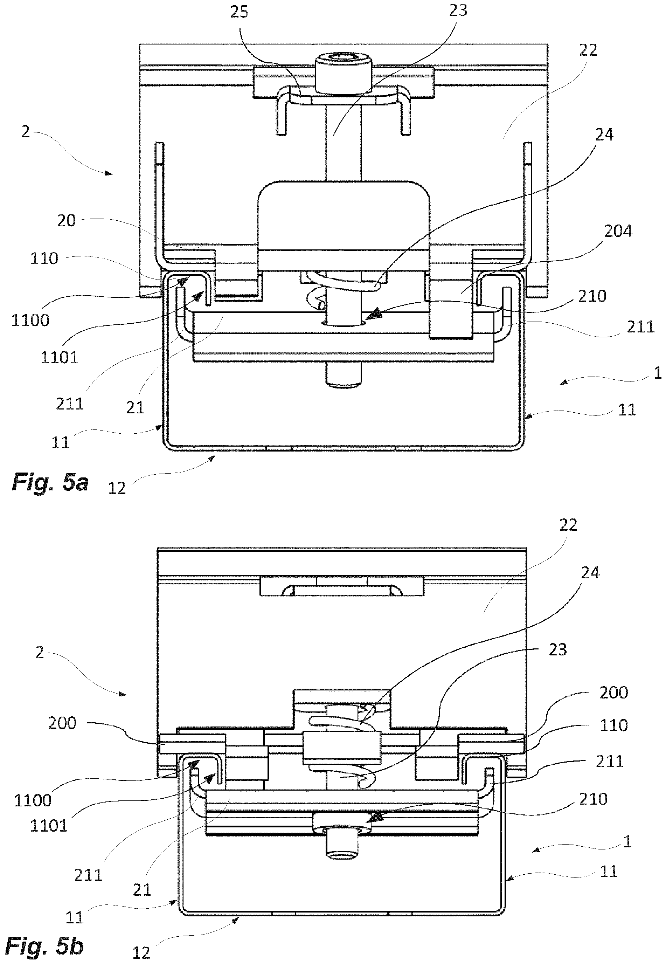

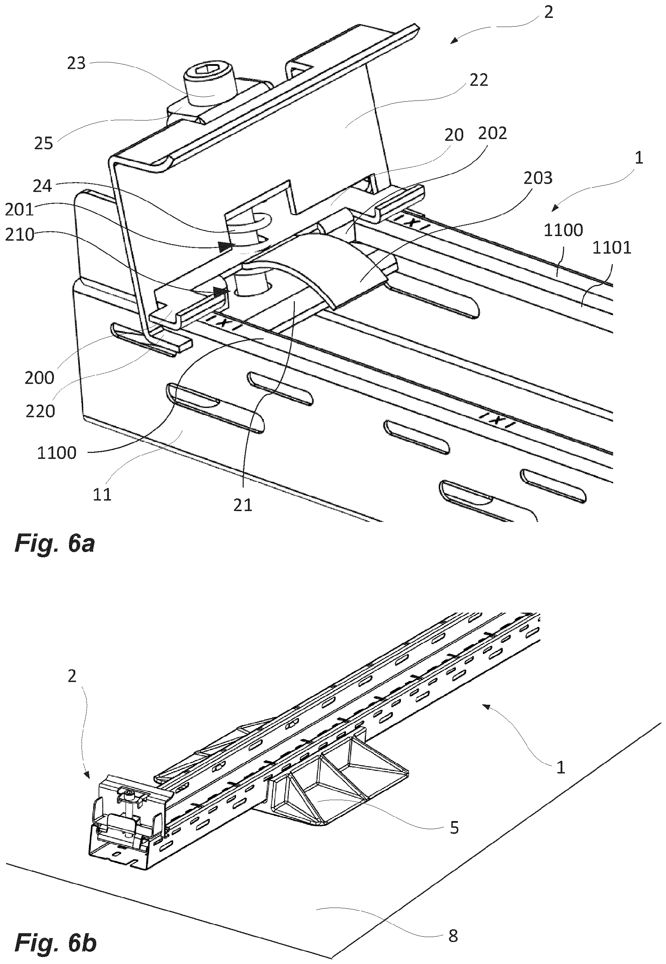

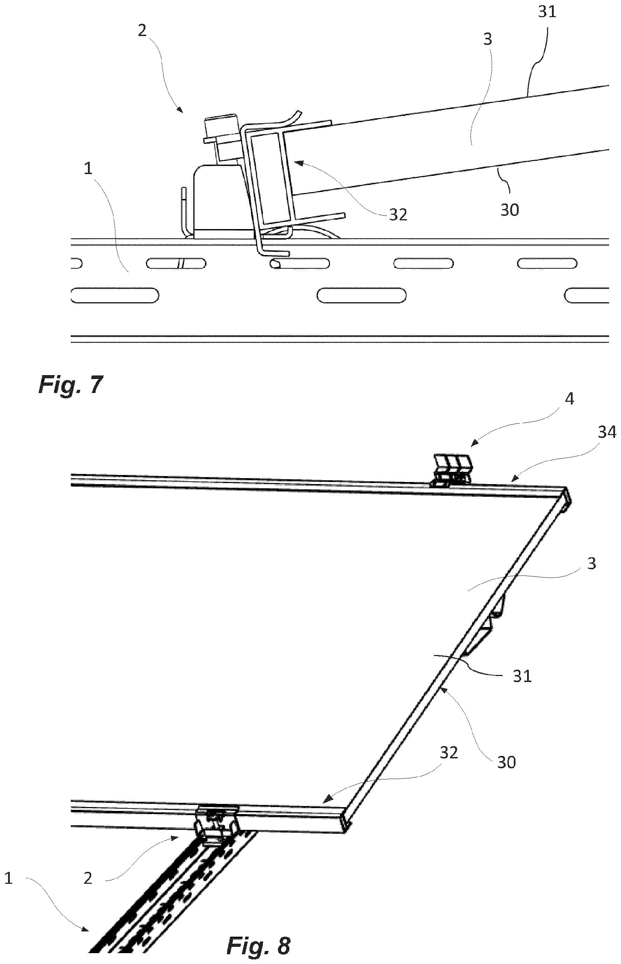

The support member 2 is arranged on the elongated base element 1. Figs. 5a-5b schematically illustrate a front view and a back view of the support member 2 when arranged on the elongated base element 1. Figs. 6a-6b schematically illustrate different views of the support member 2 when arranged on the elongated base element 1. Figs. 7-8 schematically illustrate different views of the system when it is supporting a solar panel 3.

The support member 2 may be a bracket, a holder or an attachment.

The support member 2 comprises a first body part 20. The first body part 20 is configured to abut an outer surface of the elongated base element 1 and to receive a bottom side 30 of a solar panel 3. The first body part 20 may be configured to abut outer surfaces of the two inwardly extending flanges 110. For instance outer surfaces of the first flange portions 1100.

The first body part 20 may comprise at least two side alignment members 202, 204. The side alignment members 202, 204 may comprise at least two inner side alignment members 202 configured to abut the second flange portions 1101, respectively. The side alignment members 202, 204 of the first body part 20 may further comprise at least two back side inner side alignment members 204.

The first body part 20 may comprise a bottom side solar panel receiving portion. The bottom side solar panel receiving portion may comprise two side members 200. Each side member 200 may be configured to rest on the elongated base element 1 when arranged thereto. Each of the side members 200 may be configured to rest on a respective inwardly extending flange 110. Each of the side members 200 may be configured to rest on a respective first flange portion 1100. The bottom side solar panel receiving portion may comprise a resilient member 203. The resilient member 203 may be arranged between the two side members 200. The resilient member 200 may be configured to resiliently receive a bottom side 30 of a solar panel 3 when a solar panel 3 is received. The resilient member 203 may be configured to be resiliently attached to a bottom side 30 of a solar panel 3. The resilient member 203 may have a curved shape.

The support member 2 comprises a clamping member 21. The clamping member 21 is configured to abut an inner side of the base element 1. The clamping member 21 may be configured to abut an inner side of the first flange portion 1100. The clamping member 21 may comprise two clamping portions 211. Each of the two clamping portions 211 may be configured to abut an inner side of the elongated base element 1. An end of each of the two clamping portions 211 may be configured to abut the inner side of the first flange portion 1100. The inner side of the first flange portion 1100 may be facing towards the bottom side portion 12 of the elongated base element 1.

The clamping member 21 may mainly extend in a plane in parallel with the bottom side portion 12 of the base element 1. The clamping portions 211 may extend substantially perpendicular to said plane, in a direction towards the flanges 110.

A rotation of 90 degrees of the clamping member 21 may allow for the support member 2 to, in an insertion position, be inserted between the flanges 110 to the elongated base element 1. An opposite rotation of 90 degrees of the clamping member 21 may be made when the support member 2 has been inserted to the elongated base element 1 to arrange the support member 2 to an attachment position. The clamping member 21 may have a length being shorter than a distance between the two flanges 110. The length of the clamping member 21 may be defined as the extension of the clamping member 21 in the direction of the longitudinal elongation of the base element 1 when the clamping member 21 is arranged as seen in figs. 2-6. A width of the clamping member 21 may be longer than said distance between the flanges 110, said width being defined as the extension of the clamping member 21 in a direction transversal to the longitudinal elongation of the base element 1 when the clamping member 21 is arranged as seen in figs. 2-6.

The support member 2 comprises a second body part 22 configured to receive a top side 31 of a solar panel 3. The second body part 22 may comprise at least two outer side alignment members 220 configured to be in contact with an outer side of a side wall 11, respectively.

The support member 2 comprises an operable fixation member 23 arranged to the second body part 22 and to the clamping member 21 such that when operated, the base element 1 is clamped between the first body part 20 and the clamping member 21, and a solar panel 3 received in the support member 2 is clamped between the first body part 20 and the second body part 22. The first flange portion 1100 may be clamped between the first body part 20 and the clamping member 21 when the operable fixation member 23 is operated.

The operable fixation member 23 may be arranged to an attachment portion 25 of the second body part 22. The operable fixation member 23 may extend through an opening 201 of the first body part 20.

The operable fixation member 23 may be a screw or a bolt, having a head enabling operation by means of a tool.

The operable fixation member 23 may be in threaded connection with a threaded hole 210 on the clamping member 21. The operable fixation member 23 may be operated by rotation.

A rotation of the operable fixation member 23 may thereby provide a movement of the clamping member 21 towards the second body part 22. When the clamping member 21 moves towards the second body part 22, the clamping of the elongated base element 1 between the clamping member 21 and the first body part 20 may occur. The rotation of the operable fixation member 23 may further provide a movement of the first 20 and second 22 body parts towards each other, thereby clamping a solar panel 3 arranged thereto.

The support member 2 may comprise a spring member 24 arranged between the second body part 22 and the clamping member 21. The spring member 24 may provide a biasing force of moving the clamping member 21 away from the second body part 22. The spring member 24 may be arranged around the operable fixation member 23. The spring member 24 may extend through the opening 201 in the first body part 20.

Fig. 8 schematically illustrates the system for mounting a solar panel 3 on a mounting surface. The support member 2 of the system may be a first support member 2 configured to receive a solar panel 3 at a first end 32 of the solar panel 3. The system may further comprise a second support member 4 configured to receive a second end 34 of the solar panel 3.

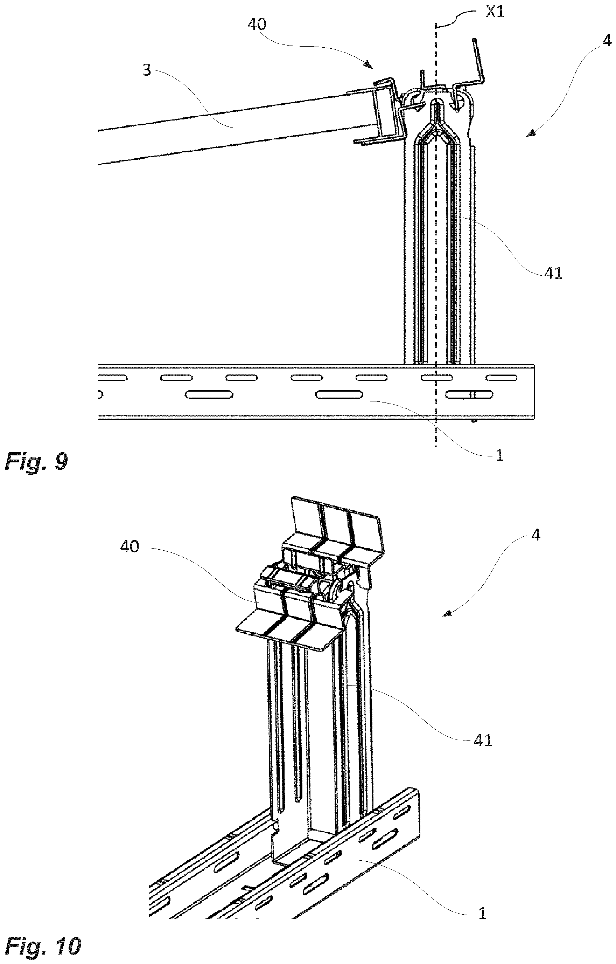

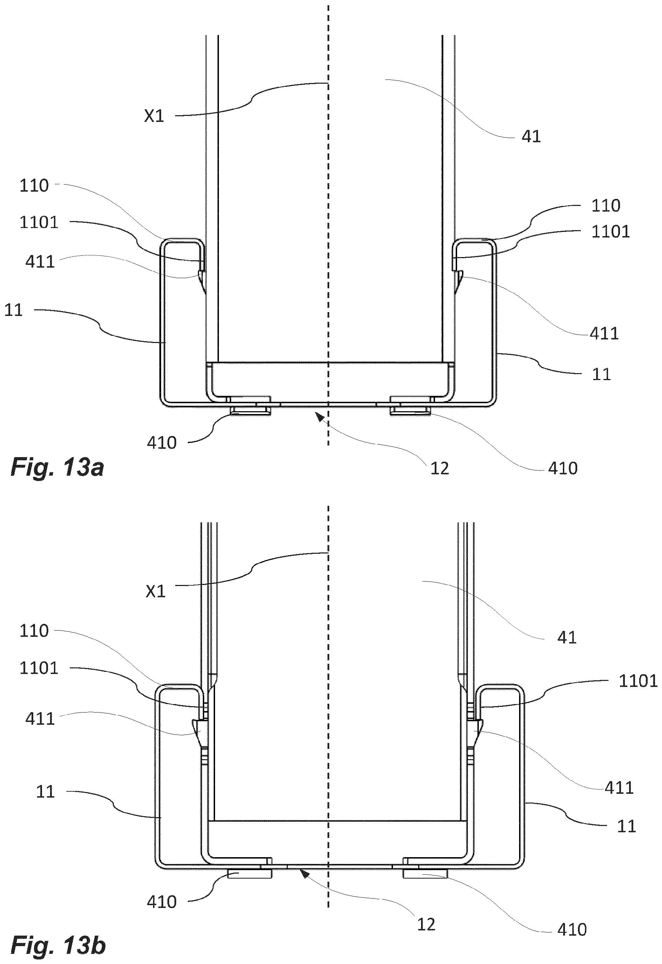

As further seen in figs. 9-13, the second support member 4 may comprise a receiving element 40 configured to receive the solar panel 3.

The second support member 4 may comprise a support column 41 to which the receiving element 40 may be arranged. The support column 41 may extend into the base element 2 between the inwardly extending flanges 110. The support column 41 may comprise at least one hook member 410. The hook member 410 may be configured to engage with at least one opening 120 in the base element 2.

The support column 41 may further comprises at least one snap member 411. The snap member 411 may be configured to form a snap fastening between the support column 41 and the base element 1, in engagement with the flange 110.

Figs. 9-13 schematically illustrate a system for mounting a solar panel 3 on a mounting surface. The system comprises at least one elongated base element 1 configured to be positioned on the mounting surface. The mounting surface may for instance be a roof of a building, particularly a flat or slightly sloping mounting surface, such as a flat or slightly sloping roof of a building. The elongated base element 1 may be substantially U-shaped. The elongated base element 1 may be a beam, rack, rim or frame. The elongated base element 1 may be formed out of metal, such as steel. The entire elongated base element 1 may be formed out of the same material. The elongated base element 1 may be formed out of different materials.

The elongated base element 1 comprises a bottom side portion 12. The bottom side portion 12 is configured to extend substantially in parallel with a mounting surface. The bottom side portion 12 may be configured to abut a mounting surface when arranged on the mounting surface. The elongated base element 1 may be configured to rest on one or more support 5. The bottom side portion 12 may be configured to rest on one or more support 5. The bottom side portion 12 may be flat. The bottom side 12 comprises one or more openings 120. The opening 120 of the bottom side 12 may be circle, ellipse, rectangular, squared, half-circle or half-ellipse shaped. The opening 120 of the bottom side portion 12 may be used for the arrangement or fixation of the elongated base element 1 to the mounting surface and/or the second support member 4.

The elongated base element 1 comprises two side walls 11. The two side walls 11 extends away from the bottom side portion 12. Each of the two side walls 11 may extend along a respective side of the bottom side portion 12, along the entire longitudinal length of the elongated base element 1.

Each of the two side walls 11 comprises an inwardly extending flange 110. The inwardly extending flanges 110 may extend substantially in parallel with the bottom side portion 12. Each of the inwardly extending flanges 110 may comprise a first flange portion 1100 extending inwardly from the respective side wall 11. Each of the inwardly extending flanges 110 may comprise a second flange portion 1101 extending from the first flange portion 1100 in a direction substantially perpendicular to the first flange portion 1100 and towards the bottom side portion 12. The inwardly extending flanges 110 may be L-shaped.

The system comprises a second support member 4 configured to receive a second end 34 of the solar panel 3. The second support member 4 may be a bracket, a holder or an attachment. The second support member 4 may extend along a longitudinal axis X1. The second support member 4 may be configured to be inserted to the base element 1 at an angle between the longitudinal axis X1 and an axis orthogonal to the bottom side portion 12 such that the second support member 4 is fastened to the base element 1 when the second support member 4 is rotated such that the longitudinal extension X1 is parallel to the axis orthogonal to the bottom side portion 12.

The second support member 4 comprises a receiving element 40 configured to receive the solar panel 3.

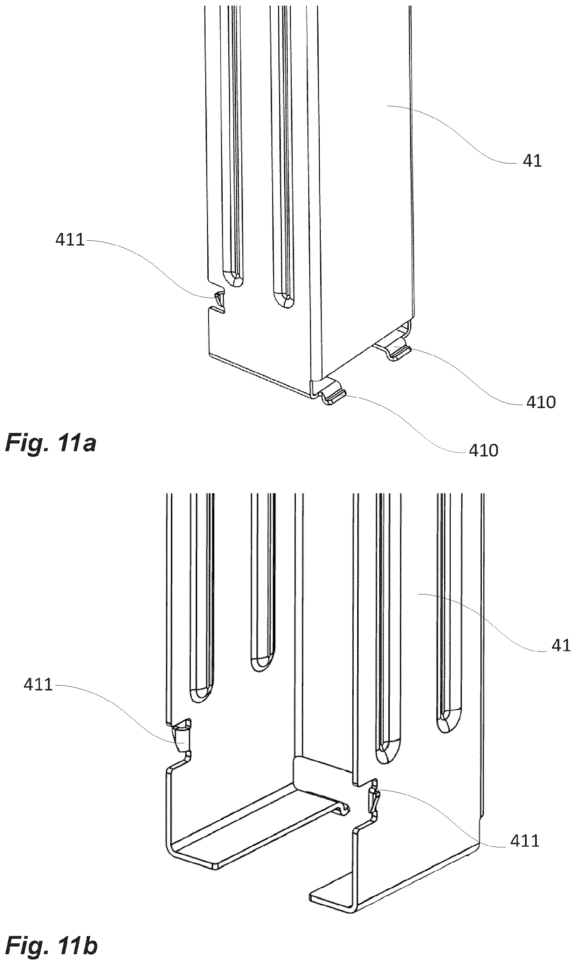

The second support member 4 comprises a support column 41 to which the receiving element 40 is arranged. Figs. 11a-11b illustrate the support column 41.

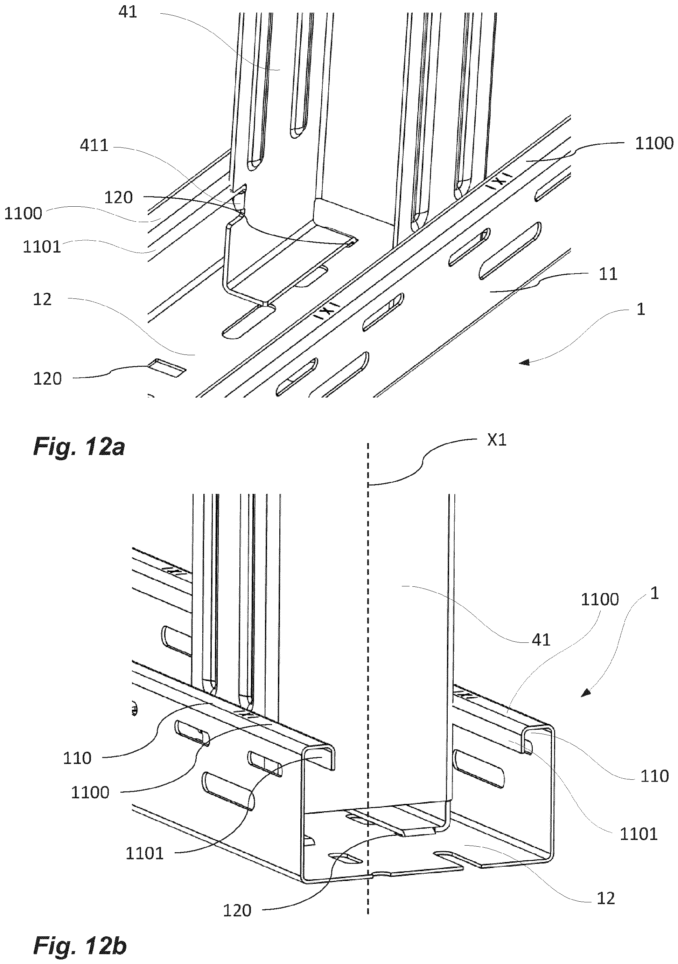

Figs. 12a-13b illustrates the support column 41 extending into the base element 1 between the inwardly extending flanges 110.

The support column 41 comprises at least one hook member 410 configured to engage with said at least one opening 120 in the base element 2. The hook member 410 may be configured to be engaged with the opening 120 when the second support member 4 has been inserted to the base element 1 and the second support member 4 has been rotated such that the longitudinal extension X1 is parallel to the axis orthogonal to the bottom side portion 12. The hook member 410 may be formed as a bent portion extending downwards when the support column 41 extends vertically. The hook member 410 may be formed to extend into the opening 120 in the surface of the bottom side portion 12 on which the support column 41 may be configured to stand. In the illustrated embodiment, the second support member 4 comprises two hook members 410.

The support column 41 comprises at least one snap member 411 configured to form a snap fastening between the support column 41 and the base element 1, in engagement with the flange 110. The snap member 411 may be configured to form a snap fastening between the support column 41 and the base element 1, in engagement with the first flange portion 1100. The snap member 411 may be configured to form a snap fastening between the support column 41 and the base element 1, in engagement with the second flange portion 1101, as illustrated. The snap member 411 may be configured to engage with an end of the second flange portion 1101.

The snap member 411 may be formed as a cut out of the support column 41 positioned at a side of the support column 41. The snap member 411 may be formed out of a portion of a side wall of the support column 41, cut and bent in a direction perpendicular to said side wall.

The snap member 411 may be configured to flex the flange 110 outwards when the second support member 4 has been inserted to the base element 1 and the second support member 4 is rotated. The snap member 411 may be configured to form a snap fastening between the support column 41 and the base element 1, in engagement with the flanges 110 when the second support member 4 has been inserted to the base element 1 and rotated such that the longitudinal extension X1 is parallel to the axis orthogonal to the bottom side portion 12.

The snap member 411 may have an increasing width along the extension of the support column in a direction away from the bottom side portion. The second support member 4 may comprise two snap members 411. Each of the snap members 411 may be configured to be in engagement with respective flange 110 such that the snap members 411 form a snap fastening between the support column 41 and the base element 1.

The support column 41 may have a width corresponding to a distance between the flanges 110. Sides of the support column 41 may, when the support column 41 is arranged to the base element 1, be adjacent to or abut the second flange portions 1101.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A system for mounting a solar panel (3) on a mounting surface, the system comprising
at least one elongated base element (1) configured to be positioned on the mounting surface;
at least one support member (2) for receiving and supporting a solar panel (3), wherein the support member (2) is arranged on the base element (1);
wherein the support member (2) comprises:
a first body part (20) configured to abut an outer surface of the base element (1) and to receive a bottom side (30) of a solar panel (3);
a clamping member (21) configured to abut an inner side of the base element (1);
a second body part (22) configured to receive a top side (31) of a solar panel (3); and
an operable fixation member (23) arranged to the second body part (22) and to the clamping member (21), such that when operated, the base element (1) is clamped between the first body part (20) and the clamping member (21), and a solar panel (3) received in the support member (2) is clamped between the first body part (20) and the second body part (22).

2. The system according to claim 1, wherein the base element (1) comprises a bottom side portion (12) configured to extend substantially in parallel with the mounting surface, and two side walls (11) extending away from the bottom side portion (12), wherein the each of the two side walls (11) of the elongated base element (1) comprises an inwardly extending flange (110);
wherein the first body part (20) is configured to abut outer surfaces of the two flanges (110), and the clamping member (21) is configured to abut an inner side of the two flanges (110).

3. The system according to claim 2, wherein the base element (1) is substantially U-shaped, and the inwardly extending flanges (110) extend substantially in parallel with the bottom side portion (12).

4. The system according to claim 2 or 3, wherein the second body part (22) comprises at least two outer side alignment members (220) configured to be in contact with an outer side of the each of the side walls (11), respectively.

5. The system according to any of claims 2-4, wherein each of the flanges (110) comprises a first flange portion (1100) extending inwardly from the respective side wall, and a second flange portion (1101) extending from the first flange portion (1100) in a direction substantially perpendicular to the first flange portion (1100) and towards the bottom side portion (12).

6. The system according to claim 5, wherein the first body part (20) comprises at least two inner side alignment members (202) configured to abut the second flange portions (1101), respectively.

7. The system according to any one of the preceding claims, wherein the clamping member (21) comprises a threaded hole (210), and the fixation member (23) is a screw or bolt in threaded connection with said threaded hole (210) and wherein the fixation member (23) is operated by rotation.

8. The system according to any one of the preceding claims, wherein a spring member (24) is arranged between the second body part (22) and the clamping member (21), providing a biasing force of moving the clamping member (21) away from the second body part (22).

9. The system according to any one of the preceding claims, wherein the first body part (20) comprises a bottom side solar panel receiving portion comprising two side members (200) each configured to rest on the base element (1), and a resilient member (203) arranged between the two side members (200), the resilient member (203) configured to be resiliently attached to a bottom side (30) of a solar panel (3).

10. The system according to any of the preceding claims, wherein the clamping member (21) is rotatable relative to the first body part (20) and/or the second body part (22) at least 90 degrees between an insertion position in which the support member (2) is arrangeable to the elongated base element (1), and an attachment position in which the elongated base element (1) can be clamped between the clamping member (21) and the first body part (20).

11. The system according to claim 2 or any one of claims 3-10 when dependent on claim 2, wherein the clamping member (21) has a length being shorter than a distance between the two inwardly extending flanges (110) and a width being longer than said distance.

12. The system according to claim 2, or any one of claims 3-11 when dependent on claim 2, wherein the support member (2) is a first support member configured to receive a solar panel (3) at a first end (32) of the solar panel (3), and wherein the system further comprises a second support member (4) configured to receive a second end (34) of the solar panel (3), wherein the second support member (4) comprises:
a receiving element (40) configured to receive the solar panel (3);
a support column (41) to which the receiving element (40) is arranged, wherein the support column (41) extends into the base element (2) between the inwardly extending flanges (110);
wherein the base element (2) comprises, in the bottom side portion (12) at least one opening (120), and the support column (41) comprises at least one hook member (410) configured to engage with said at least one opening (120) in the base element (2);
wherein the support column (41) further comprises at least one snap member (411) configured to form a snap fastening between the support column (41) and the base element (1), in engagement with the flange (110).

13. A method of arranging a solar panel (3) to a mounting surface (8) using a system for mounting a solar panel, the method comprising the steps of:
arranging an elongated base element (1) to the mounting surface (8);
arranging a support member (2) to the base element (1), the support member (2) comprising a first body part (20), a second body part (22) and a clamping member (21);
arranging a solar panel (3) to the support member (2) such that a bottom side (30) of the solar panel (3) is received by the first body part (20) and a top side (31) of the solar panel is received by the second body part (22); and
operating a fixation member (23) arranged to the second body part (22) and to the clamping member (21) such that the base element (1) is clamped between the first body part (20) abutting an outer surface of the base element (1) and the clamping member (21) abutting an inner surface of the base element (1), and such that the solar panel (3) is clamped between the first body part (20) and the second body part (22).

14. The method according to claim 13, wherein the base element (1) comprises a bottom side portion (12) extending substantially in parallel with the mounting surface (8), and two side walls (11) extending away from the bottom side portion (12), wherein the each of the two side walls (11) of the elongated base element (1) comprises an inwardly extending flange (110);
wherein the first body part (20) is configured to abut outer surfaces of the two flanges (110), and the clamping member (21) is configured to abut an inner side of the two flanges (110).

15. The method according to claim 14, wherein the support member (2) is a first support member receiving a first end (32) of the solar panel (3), and wherein the method further comprises a step of arranging a second support member (4) to the elongated base element (1), the second support member (4) comprises a receiving element (40) configured to receive a second end (34) the solar panel (3), a support column (41) to which the receiving element (40) is arranged, wherein the support column (41) comprises at least one hook member (410) and at least one snap member (411);
wherein the step of arranging the second support member (4) to the base element comprises the steps of arranging the support column (41) to extend between the flanges (110) such that the at least one hook member (410) engages with at least one opening (120) in the bottom side portion (12) of the base element (1), and fastening the support column (41) to the base element (1) by the snap member (411) forming a snap fastening between the support column (41) and the base element (1) in engagement with the flange (110).
